# FASCICULE DE BREVET EUROPEEN

(11) **EP 3 283 360 B1**
(45) Date de publication et mention de la délivrance du brevet: **15.01.2020**
(21) Numéro de dépôt: 16720463.5
(22) Date de dépôt: 18.04.2016
(51) Int. Cl.: B62D 65/18

(54) **STATION D'ASSEMBLAGE DE CAISSE DE VÉHICULE AUTOMOBILE**
MONTAGESTATION FÜR MONTAGE DER KAROSSERIE EINES KRAFTFAHRZEUGS
ASSEMBLY STATION FOR ASSEMBLING THE BODY OF A MOTOR VEHICLE

(30) Priorité: 17.04.2015 FR 1553460
(43) Date de publication de la demande: 21.02.2018
(73) Titulaire: PSA AUTOMOBILES S.A., 78300 Poissy (FR)
(72) Inventeur: JOLIVEAU, Philippe, 35310 Cintre (FR); POENCES, Guillaume, 35700 Rennes (FR)
(74) Mandataire: Fernandez, Francis Lionel
(86) Numéro de dépôt international: PCT/FR2016/050899
(87) Numéro de publication internationale: WO 2016/166494

(56) Documents cités:
- EP-A1- 1 918 182
- EP-A1- 1 935 554
- EP-A1- 2 554 459
- FR-A1- 2 522 561
- FR-A1- 2 779 405
- JP-A- 2001 151 175
- JP-A- 2011 121 436

## Description

L'invention a trait au domaine de l'assemblage des véhicules automobiles et plus particulièrement aux stations d'assemblage des caisses de ces véhicules. Une telle ligne d'assemblage est connue du document JP2001151175A, qui décrit le préambule de la revendication 1.

Les caisses de véhicules automobiles sont formées de panneaux assemblés, obtenus par emboutissage. On recense différents panneaux tels que les panneaux latéraux, le plancher et le toit qui, lorsqu'assemblés, forment une caisse sur et dans laquelle seront montés les différents composants du véhicule.

Pour des raisons de cadences de production, les caisses sont, depuis plusieurs années, assemblées par des robots. Outre la vitesse d'exécution, les robots permettent de soulager les opérateurs des chaînes de montage des fortes charges ainsi que des postures difficiles, pour éviter les troubles musculosquelettiques liés à la répétition du port de charges lourdes et à l'adoption de postures difficiles.

Les caisses sont ainsi pré-assemblées par des robots qui positionnent les différents panneaux de la caisse, puis les pré-maintiennent les uns aux autres au moyen d'éléments de fixation temporaire, tels que des agrafes. Lorsque la caisse est pré-assemblée, elle est dirigée vers la station d'assemblage où les différents éléments de la caisse sont solidarisés entre eux, par soudure ou rivetage.

Le document EP 1 935 554 présente une station d'assemblage de caisse de véhicule automobile, cette station comprenant des cadres aptes à maintenir la caisse pour son assemblage final, les cadres étant montés pivotant sur une structure se déplaçant sur un circuit.

Lors de sa mise en oeuvre, cette station d'assemblage de l'art antérieur présente de nombreux inconvénients. Premièrement, pour chaque déclinaison de carrosserie d'un même modèle, un ensemble complet, comprenant une structure et des cadres, doit être déplacé. Un tel ensemble est lourd et son déplacement est lent.

Deuxièmement, un tel ensemble est encombrant et il est nécessaire de disposer d'un grand espace de stockage des ensembles, afin de pouvoir les utiliser selon le besoin de production. Dès lors, la distance entre l'espace de stockage et la ligne de production peut être importante.

Enfin, la durée d'un cycle de production n'est pas optimale. En effet, la lenteur de déplacement et la distance parcourue par les ensembles réduit les cadences de production, des raisons de sécurité pouvant imposer une limitation de la vitesse de déplacement des ensembles, notamment dans les zones dans lesquelles les ensembles peuvent rencontrer des opérateurs.

Un premier objectif est de proposer une station d'assemblage de caisse de véhicule automobile permettant une adaptation rapide à différentes déclinaisons de carrosseries.

Un deuxième objectif est de proposer une station d'assemblage offrant une rapidité d'assemblage d'une caisse de véhicule automobile, pour un coût réduit.

Un troisième objectif est de proposer une station d'assemblage de caisse de véhicule automobile offrant une grande sécurité aux opérateurs travaillant dans un périmètre proche de la station.

Un quatrième objectif est de proposer une station d'assemblage de caisse de véhicule automobile présentant un encombrement réduit et une zone d'activité réduite.

Un cinquième objectif est de proposer une station d'assemblage de caisse de véhicule automobile facile de maintenance.

A cet effet il est proposé une station d'assemblage d'une caisse de véhicule automobile, la station d'assemblage comprenant des cadres et une structure de positionnement définissant un espace de travail comprenant deux grands côtés latéraux, chaque cadre étant apte à maintenir une partie de caisse, la station d'assemblage comprenant un robot de transfert apte à sélectionner un cadre pour une partie de caisse, en fonction d'une déclinaison particulière de carrosserie de la caisse de véhicule à assembler, la station d'assemblage comprenant des moyens de bridage d'un cadre sélectionné sur la structure de positionnement, la structure de positionnement comprenant une structure aérienne et une structure basse, la structure de positionnement étant fixe par rapport à un sol sur lequel repose la station d'assemblage, les moyens de bridage comprenant, sur la structure aérienne, une platine pourvue de repères permettant d'indexer un cadre sélectionné.

Diverses caractéristiques supplémentaires peuvent être prévues, seules ou en combinaison :
- la structure de positionnement comprend deux poutres latérales portant des index de positionnement d'un cadre sélectionné ;
- les moyens de bridage comprennent, sur la structure basse, une mâchoire définissant un logement apte à recevoir un élément d'un cadre sélectionné ;
- la station comprend deux robots de transfert sur chacun des deux grands côtés latéraux de l'espace de travail ;
- la station comprend un robot transfert apte à sélectionner un cadre pour la partie supérieure de la caisse à assembler, le cadre étant stocké en hauteur par rapport à l'espace de travail ;
- la station comprend au moins un bras de soudage ou de rivetage pour l'assemblage des éléments, tels que les panneaux, de la caisse.

Selon un mode de réalisation préféré, la station d'assemblage comprend trois cadres, à savoir un cadre pour le côté latéral droit, un cadre pour le côté latéral gauche, et un cadre pour la partie supérieure, ces cadres étant mis en place simultanément sur la structure de positionnement, fixée au sol, cette mise en place étant effectuée à l'aide de trois robots de transfert.

Il est proposé, selon un deuxième aspect, un procédé d'assemblage d'une caisse de véhicule automobile à l'aide d'une station telle que présentée ci-dessus, ce procédé comprenant une étape de sélection d'un cadre pour une partie de caisse, en fonction d'une déclinaison particulière de carrosserie de la caisse de véhicule à assembler ; une étape de déplacement du cadre sélectionné, par un robot de transfert, depuis une zone de stockage jusqu'à l'espace de travail ; une étape de bridage du cadre sélectionné à la structure de positionnement.

Diverses caractéristiques supplémentaires peuvent être prévues, seules ou en combinaison :
- le procédé comprend une étape de sélection de cadres pour les deux côtés de caisse, chaque cadre correspondant à un côté latéral de la caisse de véhicule à assembler ;
- les deux panneaux formant les côtés latéraux de la caisse de véhicule à assembler sont maintenus, pendant l'assemblage, par des cadres engagés dans l'espace de travail suivant une direction sensiblement perpendiculaire à un grand côté latéral de l'espace de travail ;
- les mouvements d'engagement des deux cadres pour les panneaux formant les côtés latéraux sont simultanés ;
- le procédé comprend une étape de sélection d'un cadre pour la partie supérieure de caisse, le cadre étant engagé dans l'espace de travail suivant une direction sensiblement verticale, depuis le dessus de l'espace de travail ;
- le mouvement d'engagement du cadre pour la partie supérieure de caisse est simultané au mouvement d'engagement des deux cadres pour les côtés latéraux de la caisse de véhicule.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue en perspective d'une station d'assemblage de caisse de véhicule ;
- la figure 2 est une vue en perspective éclatée d'une structure de positionnement de la station d'assemblage de la figure 1, cette figure comportant un médaillon de détail à échelle agrandie ;
- la figure 3 est une vue de détail de la station d'assemblage de la figure 1, lors de son utilisation, cette figure comportant un médaillon de détail à échelle agrandie ;
- la figure 4 est une vue en perspective d'un robot de la station d'assemblage de la figure 1, cette figure comportant deux médaillons de détail à échelle agrandie ;
- la figure 5 est une vue d'un bras de soudage de la station d'assemblage de la figure 1 ;
- la figure 6 est une vue en perspective d'une embase de la structure de positionnement de la figure 2 ;
- la figure 7 est une vue similaire à celle de la figure 1, dans laquelle des éléments complémentaires sont ajoutés à la station d'assemblage.

Une station 1 d'assemblage d'une caisse 2 de véhicule automobile est représentée sur les figures.

On définit, par rapport à la station 1 d'assemblage, un repère orthogonal XYZ comprenant trois axes perpendiculaires deux à deux, à savoir :
- un axe X, définissant une direction longitudinale, horizontale, confondue avec les plus grands côtés d'un espace 3 de travail sensiblement parallélépipédique dans lequel sont assemblées les caisses 2,
- un axe Y, définissant une direction transversale, horizontale, qui avec l'axe X définit un plan XY horizontal,
- un axe Z, définissant une direction verticale, perpendiculaire au plan XY horizontal.

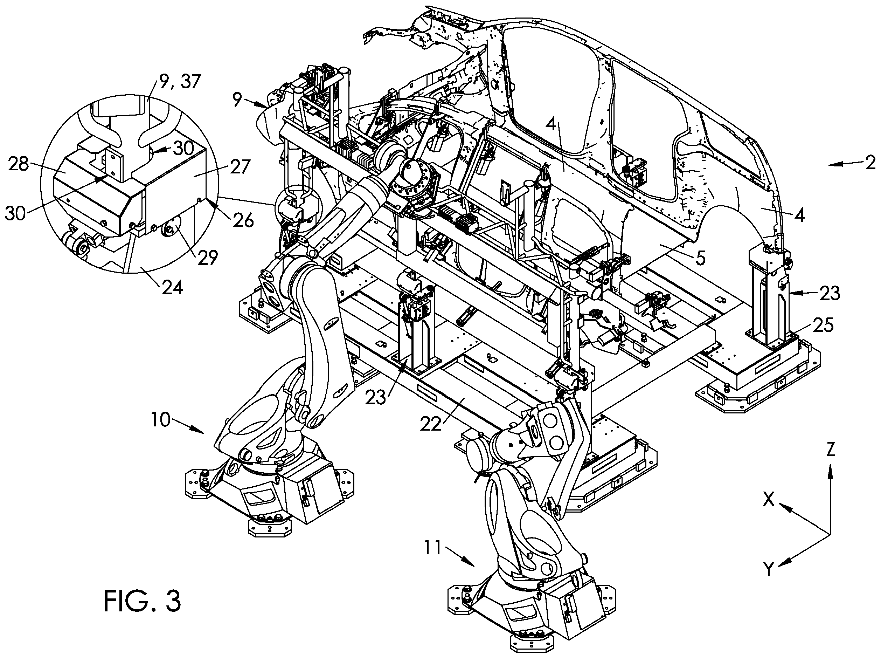

La caisse 2 du véhicule, visible en figure 3, comprend deux panneaux 4 latéraux reliés l'un à l'autre par un plancher 5. La caisse 2 comprend également en partie supérieure une ou deux traverses et éventuellement un panneau arrière. Pour des raisons de clarté, la partie supérieure n'est pas représentée sur les figures.

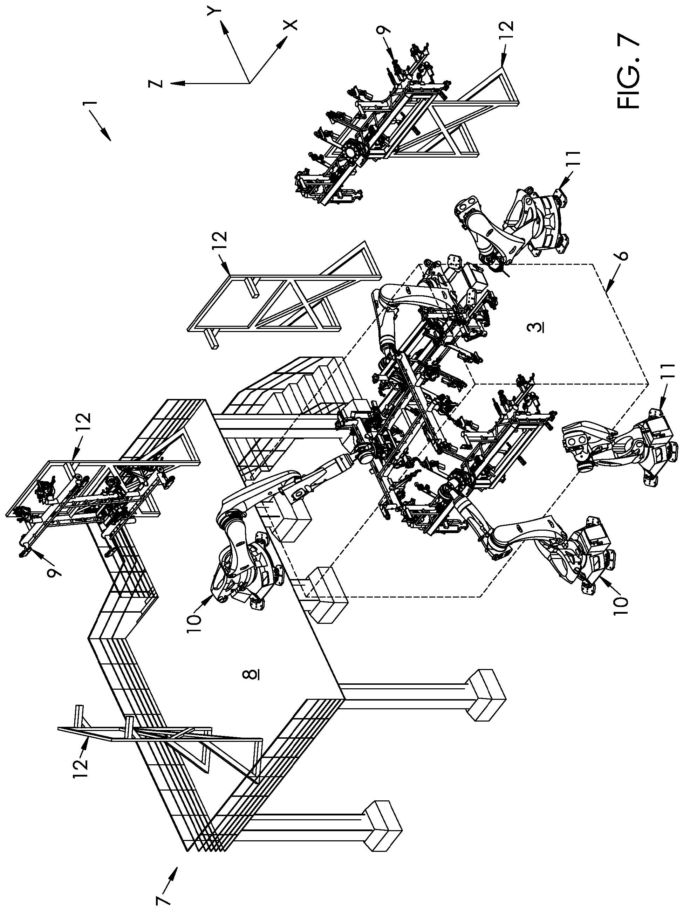

La station 1 d'assemblage comprend une structure 6 de positionnement fixée au sol, et, avantageusement comme cela est visible sur la figure 7, un balcon 7 ayant un plateau 8 s'étendant au- dessus de la structure 6 de positionnement et de l'espace 3 de travail.

La station 1 d'assemblage comprend des jeux de cadres 9 destinés à venir maintenir la caisse 2 lors de son assemblage

La station 1 d'assemblage comprend des robots pour l'assemblage de la caisse 2, à savoir des robots 10 de transfert et des bras 11 de soudage. La station 1 comprend des supports 12 aptes à recevoir les cadres 9 qui ne sont pas utilisés.

Avantageusement, la station 1 comprend plusieurs jeux de cadres 9, chaque jeu de cadres 9 correspondant à une déclinaison de carrosserie d'une caisse 2. Lors de l'assemblage d'une caisse 2, un jeu de cadres 9 correspondant à la déclinaison de carrosserie de caisse 2 à assembler est identifié, de sorte que les cadres 9 composant le jeu de cadres 9 identifié soient utilisés.

Dans la suite de cette description, nous considérerons que le jeu de cadres 9 a été préalablement identifié et que les cadres 9 utilisés sont ceux correspondant à la déclinaison de carrosserie de la caisse 2 à assembler.

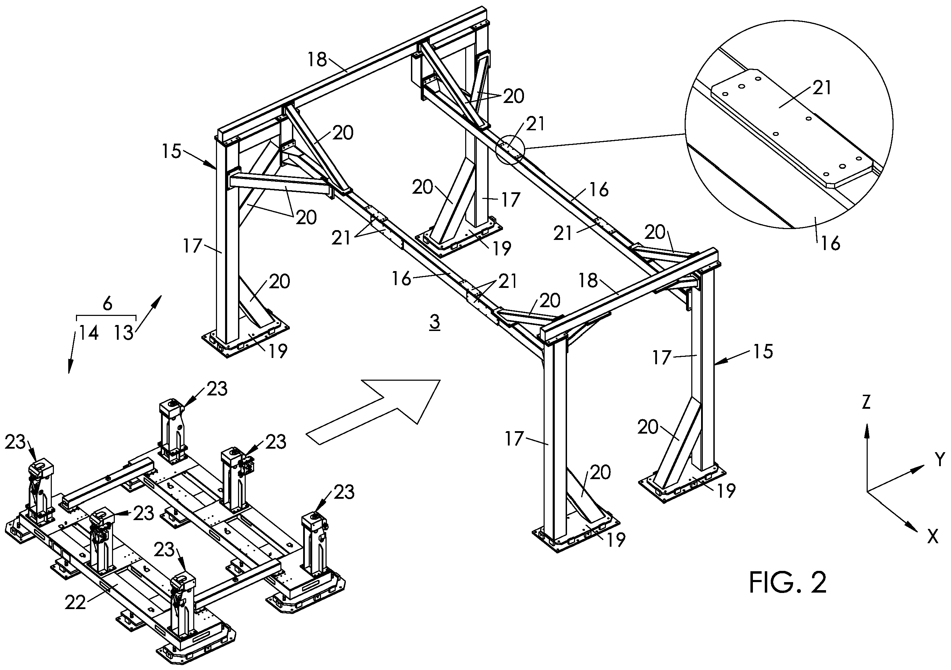

La structure 6 de positionnement, particulièrement visible sur la figure 2, se compose d'une structure 13 aérienne formant un pont définissant l'espace 3 de travail, et d'une structure 14 basse, apte à venir se loger sous la structure 13 aérienne, comme le montre la flèche de la figure 2.

La structure 13 aérienne est composée de deux bâtis 15, sensiblement transversaux, entre lesquels s'étendent deux poutres latérales 16 sensiblement longitudinales, fixées sur les bâtis 15 par exemple par boulonnage. Les bâtis 15 comprennent chacun deux pieds 17 reliés l'un à l'autre, en partie supérieure, par une traverse 18. A l'opposé de la traverse 18, les pieds 17 sont reliés à des plaques 19 de fixation.

Pour son renforcement, la structure 13 aérienne comprend des goussets 20 entre les pieds 17 et la traverse 18 de chaque bâti 15, entre les longerons 16 et les bâtis 15 et entre les pieds 17 et les plaques 19 de fixation.

De même que pour la fixation des poutres 16 sur les bâtis 15, l'assemblage des éléments de chaque bâti 15 et la fixation de la structure 13 aérienne au sol est réalisé par exemple au moyen de boulons.

Comme représenté sur le détail de la figure 2, les poutres 16 comportent des index de positionnement sous la forme de platines 21 de positionnement pourvues de repères pour permettre le positionnement et la fixation de cadres 9, en vue de l'assemblage d'une caisse 2, les cadres 9 portant des brides pour assurer leur solidarisation sur la structure 6.

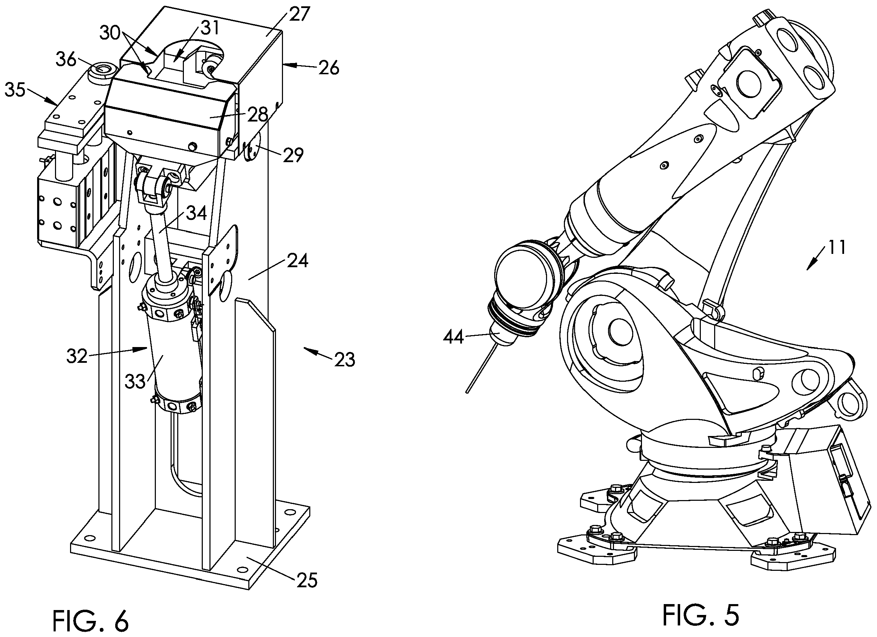

La structure 14 basse comprend un socle 22 sur lequel sont fixés des embases 23 permettant la mise et le maintien en position de cadres 9 pour l'assemblage d'une caisse 2. Ces embases 23, dont l'une est représentée en figure 6, comprennent une colonne 24 ayant, à une extrémité inférieure, un plat 25 de fixation permettant de fixer l'embase 23 sur le socle 22 de la structure 14 basse, et, à une extrémité supérieure, une mâchoire 26 pour la mise et le maintien en position des cadres 9.

La mâchoire 26 comprend un mors 27 fixe solidaire de la colonne 24 et un mors 28 mobile monté pivotant par rapport au mors 27 fixe, autour d'un axe 29. Le mors 27 fixe et le mors 28 mobile comprennent, tous deux, une découpe 30 formant un logement 31 dans lequel est reçu une partie d'un cadre 9. Le mors 28 mobile est mû au moyen d'un vérin 32 comprenant un corps 33 monté pivotant sur la colonne 24, et une tige 34 montée coulissante dans le corps 33 et reliée au mors 28 mobile.

En outre, les embases 23 comprennent un index 35 ayant un trou 36 pour assurer un positionnement précis des cadres 9. Cet index 35 est positionné à proximité de la mâchoire 26, solidaire de la colonne 24.

La station 1 d'assemblage utilise trois cadres 9, à savoir deux cadres latéraux pour le maintien de panneaux 4 latéraux, et un cadre supérieur pour le maintien de la partie supérieure de la caisse.

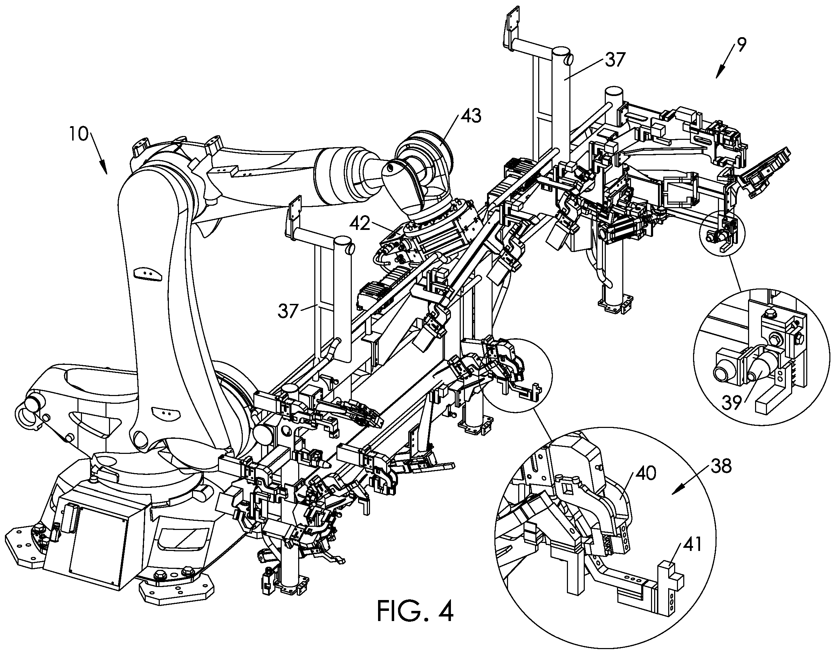

Les cadres 9, dont un est particulièrement visible en figure 4, comprennent un treillis 37 formé par assemblage de tubes, sur lequel sont montés des étaux 38 et des pions 39 de positionnement.

Deux types d'étaux 38 peuvent équiper les cadres 9.

Un premier type d'étau, tel que représenté sur le médaillon de détail de la figure 4, comprend une partie 40 fixe solidaire du treillis 37 et une partie 41 mobile par rapport à la partie 40 fixe, la partie 41 mobile étant apte à se déplacer en direction de la partie 40 fixe pour serrer un panneau 4, à la manière d'une pince.

Un deuxième type d'étau comprend également une partie 40 fixe et une partie 41 mobile, toutefois, les parties 41 mobiles ne sont pas en regard des parties 40 fixes mais entre deux parties 40 fixes. Ainsi, la zone de préhension du cadre 9, sur l'un des panneaux 4, se trouve étendue, ce qui évite la concentration des efforts mécaniques de manière locale sur les panneaux 4.

Les pions 39 de positionnement sont également positionnés sur les treillis 37 et sont aptes, pour les cadres 9 destinés à maintenir un panneau 4 latéral, à venir se loger dans le trou 36 d'un index 35 lorsque le cadre 9 est en position.

Enfin, les cadres 9 comprennent une interface 42 permettant leur prise et leur transfert par un robot 10 de transfert, le robot 10 de transfert comprenant une tête 43 de transfert apte à venir en prise avec l'interface 42 des cadres 9.

Selon le mode de réalisation représenté sur les figures, la station 1 d'assemblage comprend trois robots 10 de transfert, deux robots 10 de transfert étant positionnés de part et d'autre de la structure 6 de positionnement pour maintenir des panneaux 4 latéraux, le troisième robot 10 de transfert étant situé sur le plateau 8 du balcon 7 pour le maintien en position de la partie supérieure de la caisse. Toutefois, la station 1 d'assemblage pourrait comporter un nombre supérieur ou inférieur de robots 10 de transfert.

Les bras 11 de soudage permettent de réaliser l'assemblage de la caisse 2 au moyen de cordons de soudure. Les bras 11 de soudage comprennent une tête 44 de soudage.

Dans le cas où la caisse 2 serait assemblée par des rivets, notamment pour des caisses en aluminium, la tête 44 de soudage serait remplacée par une tête de rivetage, et le bras 11 de soudage par un bras de rivetage.

Enfin, les supports 12 sont positionnés à proximité des robots 10 de transfert, ces supports 12 servant à soutenir les cadres 9 lorsqu'ils ne sont pas utilisés. Dans l'exemple illustré sur les figures, un robot 10 de transfert est voisin de deux supports 12, un premier support 12 équipé d'un cadre 9, le deuxième support étant vide, le cadre 9 qu'il doit supporter étant utilisé par un robot 10 de transfert.

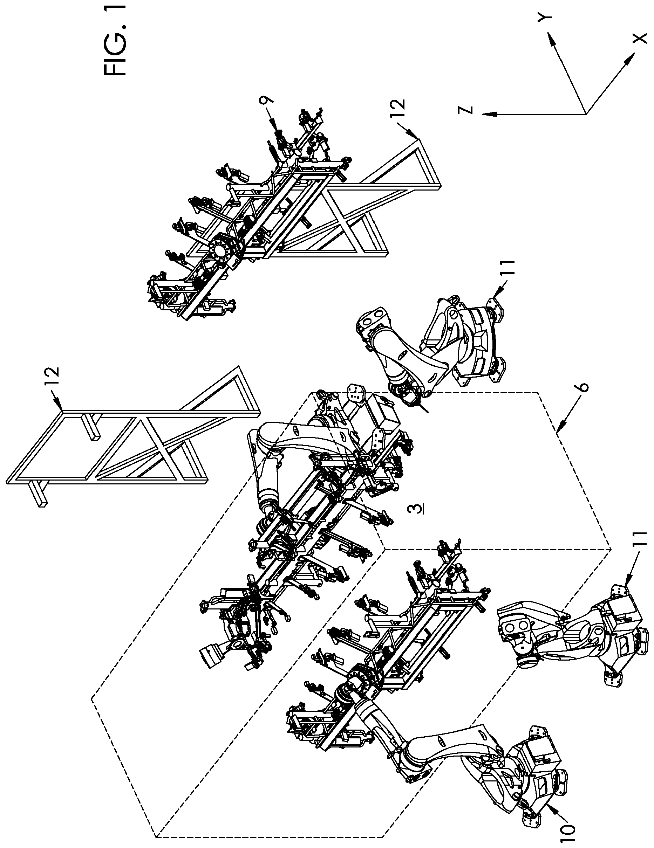

Pour des raisons de clarté, l'un des robots de la figure 1 n'est pas entouré de supports 12, toutefois, il n'en demeure pas moins que des supports 12 sont bien présents autour de ce robot 10 de transfert.

Avantageusement, la station 1 d'assemblage est destinée à assembler des caisses 2 de véhicules ayant différentes déclinaisons de carrosserie telle que, par exemple, coupé, cabriolet, break, berline ou encore monospace. Aussi, les robots 10 de transfert sont-ils entourés d'une multitude de supports 12, chaque support 12 étant dimensionné pour supporter un cadre 9 d'une déclinaison particulière de carrosserie.

Lors d'un cycle de production de véhicules, la station 1 d'assemblage des caisses 2 reçoit, dans l'espace 3 de travail, une caisse 2 pré-assemblée (côtés latéraux droit et gauche, traverse, panneau arrière) au moyen d'agrafes. Les robots 10 de transfert vont alors s'équiper d'un cadre 9 de la déclinaison de carrosserie à produire, puis positionnent les cadres 9 sur la structure 6 de positionnement. Les cadres 9 latéraux maintiennent les panneaux 4 latéraux en venant en prise avec les mâchoires 26 des embases 23 suivant un mouvement de translation transversal selon l'axe Y ainsi que les platines 21 de positionnement des poutres 16. Le cadre 9 supérieur maintient la partie supérieure en venant se prendre dans les platines 21 de positionnement des poutres 16, suivant un mouvement de translation selon l'axe Z.

Lorsque les cadres 9 sont correctement positionnés sur la structure de caisse, les étaux 38 des cadres 9 se referment, de sorte que les panneaux 4 de la caisse 2 sont correctement maintenus en position d'assemblage pendant tout le temps de l'assemblage.

Par la suite, les bras 11 de soudage soudent les différents panneaux 4 entre eux ou avec le plancher 5.

Une fois les soudures réalisées, les étaux 38 se desserrent, les cadres 9 sont retirés de la structure 6 de positionnement, et la caisse 2 formée est évacuée de l'espace 3 de travail.

Si la caisse 2 suivante à assembler est une caisse 2 de la même déclinaison de carrosserie, les robots 10 de transfert reviennent se mettre en position sur la structure 6 de positionnement dès qu'une nouvelle caisse 2 pré-assemblée est introduite dans l'espace 3 de travail.

Si la caisse 2 suivante à assembler est une caisse 2 d'une autre déclinaison de carrosserie, les robots 10 de transfert procèdent à un changement de jeux de cadres 9 pour choisir un cadre 9 adapté à la déclinaison de carrosserie à assembler.

La station 1 d'assemblage qui vient d'être décrite présente de nombreux avantages.

L'assemblage d'une caisse 2 est rapide et peu onéreux. En effet, le changement de cadre 9 pour chaque robot 10 de transfert est court et intervient en temps masqué lorsqu'une caisse 2 assemblée est évacuée de l'espace 3 de travail et qu'une caisse 2 pré-assemblée est amenée dans l'espace 3 de travail. De plus, l'espace requis pour le stockage des cadres 9 est restreint, ce qui permet de limiter l'encombrement de la station 1 d'assemblage.

La station 1 d'assemblage permet d'assembler un grand nombre de caisses 2 différentes. Ainsi, seul un changement de cadre 9 permet de fabriquer, à la suite, deux caisses 2 ayant une déclinaison de carrosserie différente, tout en conservant une cadence de production élevée.

Les opérateurs travaillant dans un périmètre proche de la station 1 d'assemblage peuvent travailler en toute sécurité. En effet, les robots 10 de transfert ne se déplacent qu'entre la structure 6 de positionnement et les supports 12, et les bras 11 de soudage ne se déplacent qu'entre la caisse 2 et une position de repos dans laquelle ils occupent un espace restreint.

La conformation de l'armature de la caisse peut être obtenue à l'aide de trois cadres, à savoir un cadre pour le côté latéral droit, un cadre pour le côté latéral gauche, et un cadre pour la partie supérieure, ces cadres étant mis en place simultanément sur la structure 6 de positionnement, fixée au sol, cette mise en place étant effectuée à l'aide de trois robots de transfert. Le bridage des cadres 9 est effectué par des moyens de bridage rapide distincts, avantageusement quatre moyens de bridage pour chaque cadre 9, deux étant portés par la partie aérienne 13 de la structure 6 de positionnement, deux étant portés par la structure basse 14 de la structure 6 de positionnement, pour les cadres 9 pour les côtés latéraux et quatre moyens de bridage pour le cadre 9 de la partie supérieure de caisse portés par la partie aérienne.

Les mouvements d'engagement des cadres permettent des références géométriques fixes et un positionnement précis des sous ensemble du véhicule.

Enfin, la maintenance de la station 1 d'assemblage est aisée, les cadres 9 pouvant être remplacés indépendamment les uns des autres lorsqu'ils sont sur leurs supports 12, sans que le remplacement n'ait d'incidence sur le déroulement du cycle de production.

## Revendications

1. Station (1) d'assemblage d'une caisse (2) de véhicule automobile, la station (1) d'assemblage comprenant des cadres (9) et une structure (6) de positionnement définissant un espace (3) de travail comprenant deux grands côtés latéraux, chaque cadre (9) étant apte à maintenir une partie de caisse (4), la station (1) d'assemblage comprenant un robot (10) de transfert apte à sélectionner un cadre (9) pour une partie de caisse (4), en fonction d'une déclinaison particulière de carrosserie de la caisse (2) de véhicule à assembler, la station (1) d'assemblage comprenant des moyens de bridage d'un cadre (9) sélectionné sur la structure (6) de positionnement, la structure (6) de positionnement comprenant une structure (13) aérienne et une structure (14) basse, la structure (6) de positionnement étant fixe par rapport à un sol sur lequel repose la station (1) d'assemblage, **caractérisée en ce que** les moyens de bridage comprennent, sur la structure (13) aérienne, une platine (21) pourvue de repères permettant d'indexer un cadre (9) sélectionné.

2. Station (1) d'assemblage selon la revendication 1, **caractérisée en ce que** la structure (6) de positionnement comprend deux poutres latérales portant des index de positionnement d'un cadre (9) sélectionné.

3. Station (1) d'assemblage selon la revendication 1 ou la revendication 2, **caractérisée en ce que** les moyens de bridage comprennent, sur la structure (14) basse, une mâchoire (26) définissant un logement (31) apte à recevoir un élément d'un cadre (9) sélectionné.

4. Station (1) d'assemblage selon l'une quelconque des revendications précédentes, **caractérisée en ce que** la station (1) comprend deux robots (10) de transfert sur chacun des deux grands côtés latéraux de l'espace (3) de travail.

5. Station (1) d'assemblage selon l'une quelconque des revendications précédentes, **caractérisée en ce qu'**elle comprend un robot (10) transfert apte à sélectionner un cadre (9) pour la partie supérieure de la caisse (2) à assembler, le cadre (9) étant stocké en hauteur par rapport à l'espace (3) de travail.

6. Station (1) d'assemblage selon l'une quelconque des revendications précédentes, **caractérisée en ce qu'**elle comprend au moins un bras (11) de soudage ou de rivetage pour l'assemblage des panneaux (4) de la caisse (2).

7. Procédé d'assemblage d'une caisse (2) de véhicule automobile à l'aide d'une station (1) selon l'une quelconque des revendications précédentes, **caractérisé en ce que** ce procédé comprend :
- une étape de sélection d'un cadre (9) pour une partie de caisse (4), en fonction d'une déclinaison particulière de carrosserie de la caisse (2) de véhicule à assembler ;
- une étape de déplacement du cadre (9) sélectionné, par un robot (10) de transfert, depuis une zone de stockage jusqu'à l'espace (3) de travail ;
- une étape de bridage du cadre (9) sélectionné à la structure (6) de positionnement.

8. Procédé selon la revendication 7, **caractérisé en ce qu'**il comprend une étape de sélection de cadres (9), chaque cadre (9) correspondant à un côté latéral de la caisse (2) de véhicule à assembler.

9. Procédé selon la revendication 8, **caractérisé en ce que** les deux panneaux (4) formant les côtés latéraux de la caisse (2) de véhicule à assembler sont maintenus par des cadres (9) engagés dans l'espace (3) de travail suivant une direction sensiblement perpendiculaire à un grand côté latéral de l'espace (3) de travail.

10. Procédé selon la revendication 9, **caractérisé en ce que** les mouvements d'engagement des deux cadres (9) pour les panneaux formant les côtés latéraux sont simultanés.

11. Procédé selon l'une quelconque des revendications 7 à 10, **caractérisé en ce qu'**il comprend une étape de sélection d'un cadre pour la partie supérieure de caisse, le cadre (9) étant engagé dans l'espace (3) de travail suivant une direction sensiblement verticale, depuis le dessus de l'espace (3) de travail.

12. Procédé selon la revendication 11, **caractérisé en ce que** le mouvement d'engagement du cadre (9) pour la partie supérieure de caisse est simultané au mouvement d'engagement de deux cadres (9) pour les côtés latéraux de la caisse (2) de véhicule.

## Patentansprüche

1. Montagestation (1) eines Fahrzeugaufbaus (2) eines Kraftfahrzeugs, wobei die Montagestation (1) Rahmen (9) und eine Positionierungsstruktur (6) umfasst, die einen Arbeitsraum (3) definiert, der zwei große seitliche Seiten umfasst, wobei jeder Rahmen (9) geeignet ist, um einen Teil eines Fahrzeugaufbaus (4) zu halten, wobei die Montagestation (1) einen Umladeroboter (10) umfasst, der geeignet ist, um einen Rahmen (9) für einen Teil des Fahrzeugaufbaus (4) in Abhängigkeit von einer besonderen Karosseriedeklination des Fahrzeugaufbaus (2) des zusammenzubauenden Fahrzeugs auszuwählen, wobei die Montagestation (1) Verflanschungsmittel eines ausgewählten Rahmens (9) auf der Positionierungsstruktur (6) umfasst, wobei die Positionierungsstruktur (6) eine überirdische Struktur (13) und eine untere Struktur (14) umfasst, wobei die Positionierungsstruktur (6) in Bezug auf einen Boden, auf dem die Montagestation (1) ruht, stationär ist, **dadurch gekennzeichnet, dass** die Verflanschungsmittel auf der überirdischen Struktur (13) eine Platte (21) umfassen, die mit Kennzeichnungen versehen ist, die es erlauben, einen ausgewählten Rahmen (9) zu positionieren.

2. Montagestation (1) nach Anspruch 1, **dadurch gekennzeichnet, dass** die Positionierungsstruktur (6) zwei Seitenträger umfasst, die Positionierungsindices eines ausgewählten Rahmens (9) tragen.

3. Montagestation (1) nach Anspruch 1 oder Anspruch 2, **dadurch gekennzeichnet, dass** die Verflanschungsmittel auf der unteren Struktur (14) backen (26) umfassen, die eine Aufnahme (31) definieren, die geeignet ist, ein Element eines ausgewählten Rahmens (9) aufzunehmen.

4. Montagestation (1) nach einem der vorstehenden Ansprüche, **dadurch gekennzeichnet, dass** die Station (1) zwei Umladeroboter (10) auf jeder der zwei großen seitlichen Seiten des Arbeitsraums (3) umfasst.

5. Montagestation (1) nach einem der vorstehenden Ansprüche, **dadurch gekennzeichnet, dass** sie einen Umladeroboter (10) umfasst, der geeignet ist, einen Rahmen (9) für den oberen Teil des Fahrzeugaufbaus (2), der zusammenzubauen ist, auszuwählen, wobei der Rahmen (9) in Höhenlage in Bezug auf den Arbeitsraum (3) gelagert ist.

6. Montagestation (1) nach einem der vorstehenden Ansprüche, **dadurch gekennzeichnet, dass** sie mindestens einen Schweiß- oder Nietarm (11) für das Zusammenbauen der Tafeln (4) des Fahrzeugaufbaus (2) umfasst.

7. Montageverfahren einer Struktur (2) eines Kraftfahrzeugs mit Hilfe einer Station (1) nach einem der vorstehenden Ansprüche, **dadurch gekennzeichnet, dass** dieses Verfahren Folgendes umfasst
- einen Schritt des Auswählens eines Rahmens (9) für einen Teil eines Fahrzeugaufbaus (4) in Abhängigkeit von einer besonderen Karosseriedeklination des Fahrzeugaufbaus (2) des zusammenzubauenden Fahrzeugs;
- einen Schritt des Verlagerns des ausgewählten Rahmens (9) durch einen Umladeroboter (10) von einer Lagerzone bis zu dem Arbeitsraum (3);
- einen Schritt des Verflanschens des ausgewählten Rahmens (9) an der Positionierungsstruktur (6).

8. Verfahren nach Anspruch 7, **dadurch gekennzeichnet, dass** es einen Schritt des Auswählens von Rahmen (9) umfasst, wobei jeder Rahmen (9) einer seitlichen Seite des zusammenzufügenden Fahrzeugaufbaus (2) entspricht.

9. Verfahren nach Anspruch 8, **dadurch gekennzeichnet, dass** die zwei Tafeln (4), die die seitlichen Seiten des Fahrzeugaufbaus (2), der zusammenzubauen ist, bilden, von Rahmen (9) gehalten werden, die in den Arbeitsraum (3) entlang einer Richtung im Wesentlichen senkrecht zu einer großen seitlichen Seite des Arbeitsraums (3) eingreifen.

10. Verfahren nach Anspruch 9, **dadurch gekennzeichnet, dass** die Eingriffsbewegungen der zwei Rahmen (9) für die Tafeln, die die seitlichen Seiten bilden, gleichzeitig erfolgen.

11. Verfahren nach einem der Ansprüche 7 bis 10, **dadurch gekennzeichnet, dass** es einen Schritt des Auswählens eines Rahmens für den oberen Fahrzeugaufbauteil umfasst, wobei der Rahmen (9) in den Arbeitsraum (3) entlang einer im Wesentlichen senkrechten Richtung ausgehend von der Oberseite des Arbeitsraums (3) eingreift.

12. Verfahren nach Anspruch 11, **dadurch gekennzeichnet, dass** die Eingriffsbewegung des Rahmens (9) für den oberen Fahrzeugaufbauteil gleichzeitig mit der Eingriffsbewegung von zwei Rahmen (9) für die seitlichen Seiten des Fahrzeugaufbaus (2) erfolgt.

## Claims

1. An assembly station (1) of a body (2) of a motor vehicle, the assembly station (1) including frames (9) and a positioning structure (6) defining a working space (3) including two large lateral sides, each frame (9) being able to hold a part (4) of the body, the assembly station (1) including a transfer robot (10) able to select a frame (9) for a part (4) of the body, as a function of a particular variation of bodywork of the body (2) of the vehicle to be assembled, the assembly station (1) including means for attaching a selected frame (9) to the positioning structure (6), the positioning structure (6) including an overhead structure (13) and a low structure (14), the positioning structure (6) being stationary with respect to a ground on which the assembly station (1) rests, **characterized in that** the attachment means include, on the overhead structure (13), a plate (21) provided with markers permitting a selected frame (9) to be indexed.

2. The assembly station (1) according to Claim 1, **characterized in that** the positioning structure (6) includes two lateral beams carrying positioning indexes of a selected frame (9).

3. The assembly station (1) according to Claim 1 or Claim 2, **characterized in that** the attachment means include, on the low structure (14), a jaw (26) defining a housing (31) able to receive an element of a selected frame (9).

4. The assembly station (1) according to any one of the preceding claims, **characterized in that** the station (1) includes two transfer robots (10) on each of the two large lateral sides of the working space (3).

5. The assembly station (1) according to any one of the preceding claims, **characterized in that** it includes a transfer robot (10) able to select a frame (9) for the upper part of the body (2) which is to be assembled, the frame (9) being stored high up with respect to the working space (3).

6. The assembly station (1) according to any one of the preceding claims, **characterized in that** it includes at least one welding or riveting arm (11) for the assembly of the panels (4) of the body (2).

7. An assembly method of a body (2) of a motor vehicle by means of a station (1) according to any one of the preceding claims, **characterized in that** this method includes:
- a step of selection of a frame (9) for a part (4) of the body, as a function of a particular variation of bodywork of the body (2) of the vehicle which is to be assembled;
- a step of displacement of the selected frame (9), by a transfer robot (10), from a storage area to the working space (3);
- a step of attaching the selected frame (9) to the positioning structure (6).

8. The method according to Claim 7, **characterized in that** it includes a step of selection of frames (9), each frame (9) corresponding to a lateral side of the body (2) of the vehicle which is to be assembled.

9. The method according to Claim 8, **characterized in that** the two panels (4) forming the lateral sides of the body (2) of the vehicle which is to be assembled are held by frames (9) engaged in the working space (3) along a direction substantially perpendicular to a large lateral side of the working space (3).

10. The method according to Claim 9, **characterized in that** the movements of engagement of the two frames (9) for the panels forming the lateral sides are simultaneous.

11. The method according to any one of Claims 7 to 10, **characterized in that** it includes a step of selection of a frame for the upper part of the body, the frame (9) being engaged in the working space (3) along a substantially vertical direction, from the top of the working space (3).

12. The method according to Claim 11, **characterized in that** the engagement movement of the frame (9) for the upper part of the body is simultaneous with the engagement movement of two frames (9) for the lateral sides of the body (2) of the vehicle.
